Europäisches Patentamt

European Patent Office

Office européen des brevets

(11) Veröffentlichungsnummer: **0 241 647**
**A2**

## (12) EUROPÄISCHE PATENTANMELDUNG

(21) Anmeldenummer: 87101187.0

(22) Anmeldetag: 28.01.87

(51) Int. Cl.⁴: **C09C 1/00**

(30) Priorität: 05.04.86 DE 3611449

(43) Veröffentlichungstag der Anmeldung:
21.10.87 Patentblatt 87/43

(84) Benannte Vertragsstaaten:
AT BE CH DE FR GB IT LI NL SE

(71) Anmelder: **Degussa Aktiengesellschaft
Weissfrauenstrasse 9
D-6000 Frankfurt am Main 1(DE)**

(72) Erfinder: **Liu, Anh Thu, Dr.
Pfarrer-Hufnagel-Strasse 12
D-6450 Hanau 1(DE)**
Erfinder: **Kleinschmit, Peter, Dr.
Wildaustrasse 19
D-6450 Hanau 9(DE)**

(54) Grundstoffe zur Herstellung von keramischen Werkstoffen.

(57) Der Grundstoff zur Herstellung von keramischen Werkstoffen enthält mindestens einen Stoff aus der Gruppe:
pyrogen, insbesondere flammenhydrolytisch, hergestelltes Zirkonoxid, welches in Wasser dispergiert, gegebenenfalls mit Salzen Seltener Erden z.B. Yttrium dotiert, und sprühgetrocknet wurde;
pyrogen, insbesondere flammenhydrolytisch, hergestelltes Zirkonoxid-Titandioxid-Mischoxid;
pyrogen, insbesondere flammenhydrolytisch, hergestelltes Aluminium-Titanoxid-Mischoxid;
pyrogen, insbesondere flammenhydrolytisch, hergestelltes Zirkonoxid-Siliciumdioxid-Mischoxid;
pyrogen, insbesondere flammenhydrolytisch, hergestelltes Siliciumdioxid, welches in Wasser dispergiert und sprühgetrocknet wurde;
pyrogen, insbesondere mittels dem Lichtbogenverfahren, hergestelltes Siliciumdioxid, welches in Wasser dispergiert und sprühgetrocknet wurde;
pyrogen, insbesondere flammenhydrolytisch, hergestelltes Zirkonoxid, welches in wässriger Dispersion mit pyrogen, insbesondere flammenhydrolytisch hergestelltem Siliciumdioxid vermischt und sprühgetrocknet wurde, enthält.

Bild 2

REM von
sprühgetrocknetem
Y-dotiertem $ZrO_2$

10 μm

EP 0 241 647 A2

## Grundstoffe zur Herstellung von keramischen Werkstoffen

Die Erfindung betrifft einen Grundstoff zur Herstellung von keramischen Werkstoffen.

Es ist bekannt, Grundstoffe zur Herstellung von keramischen Werkstoffen herzustellen, indem man auf pyrogenem Wege mittels Flammenhydrolyse von Siliciumverbindungen hergestellte Oxide in wässriger Dispersion im Gemisch mit Zirkonoxidsol sprühtrocknet (GB-PS 2 011 366)

Diese Grundstoffe haben den Nachteil, daß sie zunächst als Gele erhalten werden, und darüber hinaus noch wichtige Mengen an anionischen Verunreinigungen (meist Nitrationen) enthalten. Erst durch Erhitzen bei hohen Temperaturen werden diese Vorprodukte zu den entsprechenden Oxiden umgewandelt; dabei entweichen Stickoxide, die die Umwelt belasten.

Diese Nachteile werden umgangen, wenn man die Mischoxide direkt in der Flamme herstellt.

Gegenstand der Erfindung ist ein Grundstoff zur Herstellung von keramischen Werkstoffen, welcher dadurch gekennzeichnet ist, daß er mindestens einen Stoff aus der Gruppe:

pyrogen, insbesondere flammenhydrolytisch, hergestelltes Zirkonoxid, welches in Wasser dispergiert, gegebenenfalls mit Salzen Seltener Erden, z.B. Yttrium dotiert, und sprühgetrocknet wurde;

pyrogen, insbesondere flammenhydrolytisch, hergestelltes Zirkonxoid-Titandioxid-Mischoxid;

pyrogen, insbesondere flammenhydrolytisch, hergestelltes Aluminium-Titanoxid-Mischoxid;

pyrogen, insbesondere flammenhydrolytisch, hergestelltes Zirkonoxid-Siliciumdioxid-Mischoxid;

pyrogen, insbesondere flammenhydrolytisch, hergestelltes Siliciumdioxid, welches in Wasser dispergiert und sprühgetrocknet wurde;

pyrogen, insbesondere mittels dem Lichtbogenverfahren, hergestelltes Siliciumdioxid, welches in Wasser dispergiert und sprühgetrocknet wurde;

pyrogen, insbesondere flammenhydrolytisch, hergestelltes Zirkonoxid, welches in wässriger Dispersion mit pyrogen, insbesondere flammenhydrolytisch hergestelltem Siliciumdoixd vermischt und sprühgetrocknet wurde.

Ein weiterer Gegenstand der Erfindung isť ein pyrogen, insbesondere flammenhydrolytisch hergestelltes Zirkonoxid-Mischoxid, welches 5 bis 95 Gew.-% Siliciumdioxid als Bestandteil des Mischoxides enthält.

Das Verfahren zur Herstellung des pyrogen hergestellten insbesondere flammenhydrolytisch hergestellten Zirkonoxid-Mischoxides, welches 5 bis 95 Gew.-% Siliciumdioxid als Bestandteil des Mischoxides enthält, ist dadurch gekennzeichnet, daß man wasserfreies Zirkonchlorid verdampft, zusammen mit Inertgas, z.B. Stickstoff in die Mischkammer eines bekannten Brenners überführt, dort mit Wasserstoff und Siliciumtetrachlorid in einem derartigen Verhältnis, das das entsprechend zusammengesetzte Zirkonoxid-Mischoxid ergibt, vermischt, das 4-Komponentengemisch in einer Reaktionskammer verbrennt, danach das entsprechende feste Zirkonoxid-Mischoxid von den gasförmigen Reaktionsprodukten abtrennt und gegebenenfalls durch Erhitzen in feuchter Luft von anhaltendem Chlorwasserstoff befreit.

Ein weiteres Verfahren zur Herstellung des pyrogen, insbesondere flammenhydrolytisch hergestellten Zirkonoxid-Mischoxides, welches 5 bis 95 Gew.-% Siliciumdioxid als Bestandteil des Mischoxides enthält ist dadurch gekennzeichnet, daß man das Siliciumtetrachlorid mit Wasserstoff vermischt und diese Mischung über eine Ringdüse am Brennermund in die Flamme einführt.

Ein weiterer Gegenstand der Erfindung ist ein pyrogen, insbesondere flammenhydrolystisch hergestelltes, gegebenenfalls mit Oxiden Seltener Erden dotiertes, Zirkonoxid.

In einer besonderen Ausführungsform der Erfindung kann das Zirkonoxid eine Oberfläche von 45 ± 10 bis 100 ± 10 m²/g aufweisen. Die Stampfdichte kann 750 bis 1500 g/l betragen.

Das Molverhältnis von Oxid der Seltenen Erden zum Zirkonoxid kann 0,5 bis 8 % betragen.

Als Seltene Erden können in dem Zirkonoxid enthalten sein La, Y, Ce.

Das Verfahren zur Herstellung des pyrogen, insbesondere flammenhydrolytisch hergestellten, gegebenenfalls mit Oxiden Seltener Erden dotierten Zirkonoxides ist dadurch gekennzeichnet, daß man pyprogen, insbesondere flammenhydrolytisch hergestelltes Zirkonoxid in Wasser dispergiert, gegebenenfalls mit Salzen Seltener Erden z.B. Yttrium dotiert und sprühtrocknet.

In einer Ausführungsform der Erfindung kann der wässrigen Dispersion als Bindemittel ein Stoff aus der Gruppe der Polyvinylalkohole und Polyvinylglykole, bzw. eine Kombination aus beiden zugesetzt werden. Die Konzentration der wässrigen Dispersion kann 10 bis 50 Gew.-% betragen.

Ein weiterer Gegenstand der Erfindung ist ein pyrogen, insbesondere flammenhydrolytisch, hergestelltes Zirkon-Titan-dioxid-Mischoxid.

Das Zirkon-Titan-Mischoxid kann auf die gleiche Weise hergestellt werden wie das Zirkonoxid-Siliciumdioxid, indem man Siliciumtetrachlorid durch Titantetrachlorid ersetzt.

Ein weiterer Gegenstand der Erfindung ist ein pyrogen, insbesondere flammenhydrolytisch hergestelltes Aluminium-Titanoxid-Mischoxid.

Das Aluminiumoxid-Titan-Mischoxid kann auf die gleiche Weise hergestellt werden wie das Zirkon-Titan-Mischoxid, indem man Zirkontetrachlorid durch wasserfreies Aluminiumchlorid ersetzt.

Ein weiterer Gegenstand der Erfindung ist ein pyrogen, insbesondere flammenhydrolytisch, hergestelltes Zirkonoxid-Siliciumdioxid-Mischoxid.

In einer besonderen Ausführungsform der Erfindung kann das Zirkonoxid-Siliciumdioxid-Mischoxid eine Oberfläche von $45 \pm 5$ m²/g bis $350 \pm 10$ m²/g aufweisen. Die Stampfdichte kann 250 bis 1500 g/l betragen.

Das Zirkonoxid-Siliciumdioxid-Mischoxid kann auf die folgende Weise hergestellt werden, indem man pyrogen, insbesondere flammenhydrolytisch hergestelltes Zirkonoxid-Siliciumdioxid-Mischoxid in Wasser dispergiert, gegebenenfalls mit Ammoniak versetzt und sprühtrocknet.

Ein weiterer Gegenstand der Erfindung ist ein pyrogen, insbesondere flammenhydrolytisch, hergestelltes Siliciumdioxid, welches in Wasser dispergiert gegebenenfalls mit Ammoniak versetzt und sprühgetrocknet wurde.

In einer besonderen Ausführungsform der Erfindung kann das Siliciumdioxid die folgenden physikalisch-chemischen Kenndaten aufweisen:

Spezifische Oberfläche von $45 \pm 5$ m²/g bis $370 \pm 10$ m²/g und Stampfdichte von 200 bis 420 g/l.

Ein weiterer Gegenstand der Erfindung ist ein pyrogen, insbesondere mittels dem Lichtbogenverfahren, hergestelltes Siliciumdioxid, welches in Wasser dispergiert, gegebenenfalls mit Ammoniak versetzt und sprühgetrocknet wurde.

In einer besonderen Ausführungsform der Erfindung kann das Siliciumdioxid die folgenden physikalisch-chemischen Kenndaten aufweisen:

Spezifische Oberfläche von $150 \pm 30$ m²/g und Stampfdichte von $500 \pm 50$ g/l.

Ein weiterer Gegenstand der Erfindung ist ein pyrogen, insbesondere flammenhydrolytisch hergestelltes Zirkonoxid, welches in wässriger Dispersion mit pyrogen, insbesondere flammenhydrolytisch, hergestelltem Siliciumdioxid vermischt, gegebenenfalls mit Ammoniak versetzt und sprühgetrocknet wurde.

In einer besonderen Ausführungsform kann das Mischoxid die folgenden physikalisch-chemischen Kenndaten aufweisen:

Spezifische Oberfläche von $45 \pm 5$ m2/g und Stampfdichte von 200 bis 1500 g/l

Die erfindungsgemäßen Stoffe können vorteilhaft zur Herstellung von keramischen Werkstoffen eingesetzt werden. Von besonderem Vorteil ist:

1. Die Produkte sind sehr feinteilig und daher sehr sinterfähig.

2. Die Produkte sind hochrein (Cl kann bei der Entsäuerung quantitativ entfernt werden).

3. Die Mischoxide sind in beliebigen Mengenverhältnissen herstellbar; dabei wird eine höchsthomogene Verteilung der Oxide ineinander erreicht.

4. Die Oxide entstehen meist in ihren Hochtemperaturphasen, die bei den naßgefällten Oxiden erst durch Kalzinierung bei hohen Temperaturen erhalten werden.

5. Verfahren ist kontinuierlich, daher wirtschaftlich.

6. Durch die Sprühtrocknung bleiben die definierten Primärteilchen und die Kristallstruktur der pyrogen, insbesondere flammenhydrolytisch, hergestellten Oxide oder Mischoxide unverändert. Die Produkte werden nur microgranuliert; dadurch entstehen dichte, sinterfähige Gebilde, ohne daß ein Teilchenwachstum vorangegangen ist.

Beispiel 1

Es wird auf dem Wege der Flammenhydrolyse unter Verwendung von Zirkontetrachlorid als Ausgangsmaterial Zirkonoxid $ZrO_2$ hergestellt.

Die Reaktionsbedingungen sind wie folgt:

| | |
|---|---|
| Reaktionsluft | : 1,0 Nm$^3$/h |
| H$_2$ | : 0,4 Nm$^3$/h |
| Traggas N$_2$ | : 1,0 Nm$^3$/h |
| ZrCl$_4$-Verdampfer | : 350$^\circ$C |
| Ausgangsmaterial | : 400 g ZrCl$_4$/h |
| Oberfläche | : 104 m$^2$/g |
| Schüttgewicht | : 53 g/l |
| Analysen | : Cl$^-$ = 2,66 %, SiO$_2$ = 160 ppm |

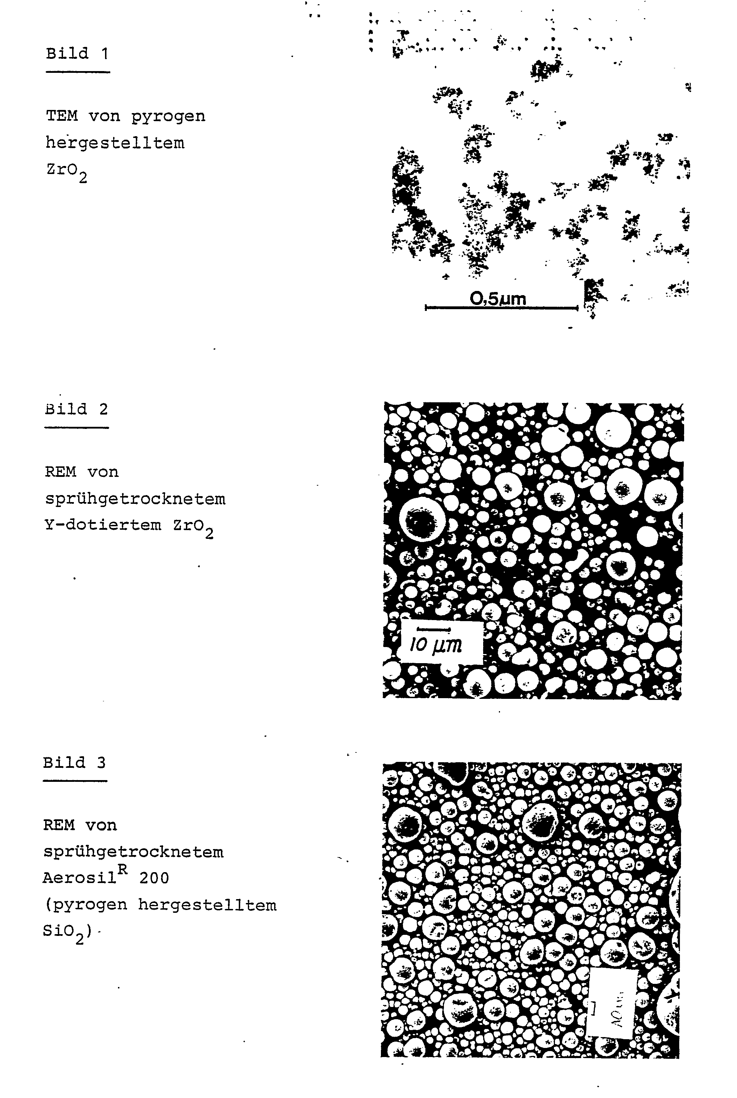

Die Kristallstrukturanalyse zeigt tetragonales ZrO$_2$ (ASTM-Nr. 17.923) als die Hauptphase im Produkt und geringe Beimengung von monoklinem ZrO$_2$ (ASTM-Nr. 13.307). Die Trans missionselektronenmikroskopischen (TEM) Aufnahmen zeigen agglomerierte kugelige Teilchen mit einem durchschnittlichen Durchmesser von 8 - 10 mm (Bild 1).

### Beispiel 2

In 500 ml Wasservorlage werden 4 g Polyäthylenglykol (PEG 20 000, Firma Merck) und 1 g Polyvinylalkohol (Mowiol 3-83, Firma Hoechst) gelöst und 100 g Zirkonoxid von Beispiel 1 eingerührt. Anschließend wird die Suspension mit 165,7 ml einer Yttriumacetatlösung der Konzentration von 38,7 g Y/l versetzt. Der Feststoffgehalt wurde durch Wasserzugabe auf 10 % eingestellt, die Dispersion homogenisiert und sprühgetrocknet. Das Produkt hat ein Schüttgewicht von 1015 g/l bzw. eine Stampfdichte von 1180 g/l und eine spezifische Oberfläche von 56 m²/g. Die Phasenanalyse mittels Röntgenbeugung zeigt die unveränderte tetragonale Kristallstruktur von Zirkonoxid. Eine REM-Aufnahme ist beigefügt (Bild 2) und zeigt die dichte Packung der Primärteilchen in den Mikrogranulaten.

### Beispiel 3

Es wird ein Aluminium-Titan-Mischoxid mittels gemeinsamer Flammenhydrolyse von AlCl$_3$ und TiCl$_4$ hergestellt.

Die Reaktionsbedingungen sind wie folgt:

| | |
|---|---|
| Reaktionsluft | : 0,5 Nm$^3$/h |
| H$_2$ | : 0,2 Nm$^3$/h |
| Traggas AlCl$_3$ | : 0,8 Nm$^3$/h |
| Traggas TiCl$_4$ | : 30 l/h |
| AlCl$_3$-Verdampfer | : 235$^\circ$C |
| TiCl$_4$-Vorlage | : 137$^\circ$C |
| Ausgangsmaterial | : 286 g/h AlCl$_3$ |
| | 117 ml/h TiCl$_4$ |
| Analysen | : |

Beispiel 4

Es wird das Zirkonoxid-Titanoxid-Mischoxid mittels gemeinsamer Flammenhydrolyse von Zirkonchlorid und Titanchlorid hergestellt.

Die Reaktionsbedingungen sind wie folgt:

```
Reaktionsluft           : 0,5 Nm³/h
H₂                      : 0,2 Nm³/h
Traggas-ZrCl₄           : 0,5 Nm³/h
Traggas-TiCl₄           : 30 l/h
ZrCl₄-Verdampfer        : 350°C
TiCl₄-Vorlage           : 139°C
Ausgangsmaterial        : 214 g/h ZrCl₄
                          167 ml/h TiCl₄
Analysen                : Schüttgewicht 54 g/l, Oberfläche 66 m²/g
```

Beispiel 5 ZrO₂/TiO₂

Reaktionsbedingungen, wenn nicht spezifiziert, dann analog Beispiel 4

```
Reaktionsluft           : 1,0 Nm³/h
H₂                      : 0,4 Nm³/h
Ausgangsmaterial        : 789 g/h ZrCl₄
                          279 ml/h TiCl₄
Analysen                : Oberfläche 62 m²/g
```

Beispiel 6 ZrO₂/TiO₂

Reaktionsbedingungen:

```
Reaktionsluft           : 0,75 Nm³/h
H₂                      : 0,30 Nm³/h
Traggas ZrCl₄           : 0,50 Nm³/h
Traggas-TiCl₄           : 30 l/h
ZrCl₄-Verdampfer        : 345°C
TiCl₄-Vorlage           : 139°C
Ausgangsmaterial        : 88 g/h ZrCl₄
                          521 l/h TiCl₄
Analysen                : Schüttgewicht 71 g/l; Oberfläche 50 m²/g
```

5

Beispiel 7 ZrO₂/SiO₂

Reaktionsbedingungen:

| | |
|---|---|
| Reaktionsluft | : 1,0 Nm³/h |
| H₂ | : 0,4 Nm³/h |
| Traggas-ZrCl₄ | : 0,8 Nm³/h |
| Traggas-SiCl₄ | : 30 l/h |
| ZrCl₄-Verdampfer | : 400°C |
| SiCl₄-Vorlage | : 58°C |
| Ausgangsmaterial | : 330 g/h ZrCl₄ |
| | 23 ml/h SiCl₄ |
| Analyse | : Schüttgewicht 60 g/l; Oberfläche 109 m²/g |

Beispiel 8 ZrO₂/SiO₂

Reaktionsbedingungen:

| | |
|---|---|
| Reaktionsluft | : 0,6 Nm³/h |
| H₂ | : 0,25 Nm³/h |
| Traggas-SiCl₄ | : 30 l/h |
| Traggas-ZrCl₄ | : 0,4 Nm³/h |
| ZrCl₄-Verdampfer | : 400°C |
| SiCl₄-Vorlage | : 58°C |
| Ausgangsmaterial | : 70 g/h ZrCl₄ |
| | 340 ml/h SiCl₄ |
| Analyse | : Oberfläche 333 m²/g, Cl = 0,24 % |
| | Schüttgewicht = 24 g/l |

Beispiel 9 ZrO₂ /SiO₂

Reaktionsbedingungen: siehe Beispiel 11

```
ZrCl₄-Verdampfer          : 400°C
SiCl₄-Vorlage             : 54°C
Ausgangsmaterial          : 350 g/h ZrCl₄
                            20 ml/h SiCl₄
Analysen                  : Schüttgewicht = 50 g/l, Cl⁻ = 0,62 %
                            Oberfläche = 80 m²/g
```

Beispiel 10 ZrO₂ /SiO₂

Reaktionsbedingungen: siehe Beispiel 11

```
ZrCl₄-Verdampfer          : 400°C
SiCl₄-Vorlage             : 60°C
Ausgangsmaterial          : 120 g/h ZrCl₄
                            550 l/h SiCl₄
Analyse                   : Oberfläche = 253 m²/g
```

Beispiel 11 ZrO₂ /SiO₂

Reaktionsbedingungen:

```
Reaktionsluft             : 0,6 Nm³/h
H₂                        : 0,25 Nm³/h
Traggas-ZrCl₄             : 0,4 Nm³/h
Traggas-SiCl₄             : 30 l/h
ZrCl₄-Verdampfer          : 400°C
SiCl₄-Vorlage             : 59°C
Ausgangsmaterial          : 70 g ZrCl₄
                            275 ml SiCl₄
Analyse                   : Schüttgew. 30 g/l, Cl:0,33 %
                            Oberfl. 264 m²/g
```

7

Beispiel 12

100 g einer kommerziellen, flammenhydrolytisch hergestellten Kieselsäure (Aerosil® 200) oder einer ebenfalls kommerziellen, im Lichtbogen hergestellten Kieselsäure (TK 900®) wurden in Wasser in der in Tabelle 1 angegebenen Konzentration eingerührt, die Dispersion gegebenenfalls mit Ammoniak auf pH 8 eingestellt und sprühgetrocknet. Die Kenndaten der Produkte vor und nach der Behandldung sind der Tabelle 1 zu entnehmen.

Tabelle 1

Vergleichsdaten der pyrogenen Siliciumdioxide

| Oxïd | Feststoff-gehalt (G%) | pH | Spez.Ober-fläche ($m^2/g$) | Stampfdichte (g/l) |
|---|---|---|---|---|
| A 200 | Ausgangsmater. | – | 201 | 60 |
| (flammenhydro- | 10 | 3,6 | 187 | 180 |
| lytisch herge- | 10 | 8 | 196 | 210 * |
| stellte Kie- | 20 | 3,4 | 183 | 400 |
| selsäure) | | | | |
| TK 900 | Ausgangsmater. | . | 150 | 100 |
| (Lichtbogen | 10 | 3,8 | 152 | 470 |
| Kiesel- | 10 | 8,0 | 136 | 540 |
| säure) | 20 | 3,5 | 154 | 550 |

* REM-Aufnahme des Produktes ist beigefügt (Bild 3)

Beispiel 13

100 g des Zirkonoxids aus dem Beispiel 1 wurde in 850 ml suspendiert und equimolare Menge (48,8 g) eines kommerziellen flammenhydrolytisch hergestellten Siliciumdioxids (Aerosil® 200) in Portionen der Suspension zugegeben. Die Mischung wurde mit dem Thurax-Mischer homogenisiert und versprüht. Das Produkt hat eine spezifische Oberfläche von 125 m²/g und die Stampfdichte von 475 g/l.

Beispiel 14

ZrO$_2$/SiO$_2$-Mischoxid wurde zunächst flammenhydrolytisch unter den folgenden Reaktionsbedingungen hergestellt:

```
Raktionsluft         : 0,6 Nm³/h
H₂                   : 0,25 Nm³/h
Traggas-ZrCl₄        : 0,4 Nm³/h
Traggas-SiCl₄        : 30 Nl/h
ZrCl₄-Verdampfer     : 400°C
SiCl₄-Vorlage        : 58°C
Durchsatz            : 190 g/h ZrCl₄
                       70 ml/h SiCl₄
Analyse              : Schüttgewicht = 39 g/l, Oberfläche 130 m²/g
                       Cl⁻ = 0,17 %
```

100 g des so erhaltenen Mischoxids wurden in 900 ml Wasser eingerührt und sprühgetrocknet. Das sprühgetrocknete Produkt hat eine spezifische Oberfläche von 142 m²/g und ein Schüttgewicht von 370 g/l bzw. eine Stampfdichte von 440 g/l.

**Ansprüche**

1. Grundstoff zur Herstellung von keramischen Werkstoffen, dadurch gekennzeichnet, daß er mindestens einen Stoff aus der Gruppe:

pyrogen, insbesondere flammenhydrolytisch, hergestelltes Zirkonoxid, welches in Wasser dispergiert, gegebenenfalls mit Salzen Seltener Erden z.B. Yttrium dotiert, und sprühgetrocknet wurde;

pyrogen, insbesondere flammenhydrolytisch, hergestelltes Zirkonoxid-Titandioxid-Mischoxid;

pyrogen, insbesondere flammenhydrolytisch, hergestelltes Aluminium-Titanoxid-Mischoxid;

pyrogen, insbesondere flammenhydrolytisch, hergestelltes Zirkonoxid-Siliciumdioxid-Mischoxid;

pyrogen, insbesondere flammenhydrolytisch, hergestelltes Siliciumdioxid, welches in Wasser dispergiert und sprühgetrocknet wurde;

pyrogen, insbesondere mittels dem Lichtbogenverfahren, hergestelltes Siliciumdioxid, welches in Wasser dispergiert und sprühgetrocknet wurde;

pyrogen, insbesondere flammenhydrolytisch, hergestelltes Zirkonoxid, welches in wässriger Dispersion mit pyrogen, insbesondere flammenhydrolytisch hergestelltem Siliciumdioxid vermischt und sprühgetrocknet wurde, enthält.

2. Pyrogen, insbesondere flammenhydrolytisch hergestelltes Zirkonoxid-Mischoxid, welches 5 bis 95 Gew.-% Siliciumdioxid als Bestandteil des Mischoxides enthält.

3. Verfahren zur Herstellung des pyrogen hergestellten, insbesondere flammenhydrolytisch hergestellten Zirkonoxid-Mischoxides, welches 5 bis 95 Gew.-% Siliciumdioxid als Bestandteil des Mischoxides enthält, nach Anspruch 2 dadurch gekennzeichnet, daß man wasserfreies Zirkonchlorid verdampft, zusammen mit Inertgas, z.B. Stickstoff in die Mischkammer eines bekannten Brenners überführt, dort mit Wasserstoff und Siliciumtetrachlorid in einem derartigen Verhältnis, das das entsprechend zusammengesetzte Zirkonoxid-Mischoxid ergibt, vermischt, das 4-Komponentengemisch in einer Reaktionskammer verbrennt, danach das entsprechende feste Zirkonoxid-Mischoxid von den gasförmigen Reaktionsprodukten abtrennt und gegebenenfalls durch Erhitzen in feuchter Luft an anhaltendem Chlorwasserstoff befreit.

4. Verfahren zur Herstellung des pyrogen, insbesondere flammenhydrolytisch hergestellten Zirkonoxid-Mischoxides, welches 5 bis 95 Gew.-% Siliciumdioxid als Bestandteil des Mischoxides enthält nach Anspruch 3, dadurch gekennzeichnet, daß man das Siliciumtetrachlorid mit Wasserstoff vermischt und diese Mischung über eine Ringdüse am Brennermund in die Flamme einführt.

9

5. Pyrogen, insbesondere flammenhydrolytisch hergestelltes, gegebenenfalls mit Oxiden Seltener Erden dotiertes Zirkonoxid.

6. Verfahren zur Herstellung des Zirkonoxides gemäß Anspruch 5, dadurch gekennzeichnet, daß man pyrogen, insbesondere flammenhydrolytisch hergestelltes Zirkonoxid in Wasser dispergiert, gegebenenfalls mit Salzen Seltener Erden z.B. Yttrium dotiert, und sprühtrocknet.

7. Pyrogen, insbesondere flammenhydrolytisch, hergestelltes Zirkon-Titandioxid-Mischoxid.

8. Pyrogen, insbesondere flammenhydrolytisch, hergestelltes Aluminium-Titanoxid-Mischoxid.

9. Pyrogen, insbesondere flammenhydrolytisch, hergestelltes Zirkonoxid-Siliciumdioxid-Mischoxid.

10. Pyrogen, insbesondere flammenhydrolytisch, hergestelltes Siliciumdioxid, welches in Wasser dispergiert und sprühgetrocknet wurde.

11. Pyrogen, insbesondere mittels dem Lichtbogenverfahren, hergestelltes Siliciumdioxid, welches in Wasser dispergiert und sprühgetrocknet wurde.

12. Pyrogen, insbesondere flammenhydrolytisch hergestelltes Zirkonoxid, welches in wässriger Dispersion mit pyrogen, insbesondere flammenhydrolytisch, hergestelltem Siliciumdioxid vermischt und sprühgetrocknet wurde.

**Bild 1**

TEM von pyrogen
hergestelltem
$ZrO_2$

0,5µm

**Bild 2**

REM von
sprühgetrocknetem
Y-dotiertem $ZrO_2$

10 µm

**Bild 3**

REM von
sprühgetrocknetem
Aerosil[R] 200
(pyrogen hergestelltem
$SiO_2$)·